# EUROPÄISCHE PATENTSCHRIFT

(11) **EP 2 746 197 B1**
(45) Veröffentlichungstag und Bekanntmachung des Hinweises auf die Patenterteilung: **08.06.2016**
(21) Anmeldenummer: 12198389.4
(22) Anmeldetag: 20.12.2012
(51) Int. Cl.: B65G 21/20

(54) **Blisterstreifentransportvorrichtung**
Blister pack transport apparatus
Dispositif pour transporter des emballages du type blister

(43) Veröffentlichungstag der Anmeldung: 25.06.2014
(73) Patentinhaber: MediSeal GmbH, 33758 Schloss Holte-Stukenbrock (DE)
(72) Erfinder: Biehl, Johann, 33758 Schloss Holte-Stukenbrock (DE); Zellermann, Michael, 33415 Verl (DE)
(74) Vertreter: REHBERG HÜPPE + PARTNER

(56) Entgegenhaltungen:
- DE-A1-102005 046 603
- US-A- 3 140 030
- US-A- 4 620 826
- US-A- 5 706 994
- US-A- 6 044 959

## Beschreibung

### TECHNISCHES GEBIET DER ERFINDUNG

Die Erfindung betrifft eine Blisterstreifentransportvorrichtung mit einem umlaufend antreibbaren Transportband mit einer Außenseite und einer Innenseite, wobei die Außenseite zur Aufnahme der Gegenstände dient. Die Vorrichtung weist weiterhin eine Unterdruckkammer auf, die durch die Innenseite des Transportbands mitgebildet wird.

Derartige Vorrichtungen dienen zum Transportieren von in Blisterverpackungen verpackten pharmazeutischen oder kosmetischen Produkten. Die Produkte sind in Blisterverpackungen als Primärverpackung verpackt und werden mittels der Vorrichtung einer Sekundärverpackung, insbesondere einer Faltschachtel, zugeführt, um in dieser verpackt zu werden.

### STAND DER TECHNIK

Eine Blisterstreifentransportvorrichtung mit einem umlaufend antreibbaren Transportband ist aus dem deutschen Gebrauchsmuster DE 203 16 979 U1 bekannt. Das Transportband weist eine Außenseite und eine Innenseite auf, wobei die Außenseite zur Aufnahme der Blisterstreifen dient. Eine Unterdruckkammer wird durch die Innenseite des Transportbands mitgebildet.

Eine ähnliche Vorrichtung ist auch aus der deutschen Patentanmeldung DE 10 2005 046 603 A1 bekannt. Das Transportband weist dabei mit Unterdruck beaufschlagte Ausnehmungen auf, die an die Geometrie der Höfe der Blisterstreifen angepasst sind. Die Höfe der Blisterstreifen sind formschlüssig in den Ausnehmungen gehalten.

Eine Vorrichtung zum Transportieren von Gegenständen ist aus der deutschen Patentanmeldung DE 30 01 531 A1 bekannt. Die Vorrichtung weist ein Transportband mit einer Außenseite und einer Innenseite auf, wobei die Außenseite zur Aufnahme der Gegenstände dient. An der Außenseite sind Erhebungen vorgesehen, die jeweils eine Durchbrechung aufweisen und die über die Durchbrechung mit Unterdruck beaufschlagt werden.

Aus dem US-amerikanischen Patent US 3,140,030 ist eine Vorrichtung zum Herstellen von Wellpappe bekannt. Die Vorrichtung weist ein umlaufend antreibbares Transportband mit einer Außenseite und einer Innenseite auf, wobei die Außenseite zur Aufnahme der Wellpappe dient. Die Vorrichtung weist weiterhin eine Unterdruckkammer auf, die durch die Innenseite des Transportbands mitgebildet wird. Die Vorrichtung weist ein umlaufend antreibbares Unterdruckkammerband auf, das die Unterdruckkammer mitbildet. Die Vorrichtung dient zum Flachhalten der Wellpappe während des Aushärtens des Klebers zwischen der Wellenbahn und der Außendecke.

### AUFGABE DER ERFINDUNG

Der Erfindung liegt die Aufgabe zugrunde, eine Blisterstreifentransportvorrichtung mit einem Transportband bereitzustellen, mit der die Blisterstreifen in wirtschaftlicher Weise sicher auf dem Transportband positioniert und mit diesem transportiert werden können.

### LÖSUNG

Die Aufgabe der Erfindung wird erfindungsgemäß mit den Merkmalen des unabhängigen Patentanspruchs 1 gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Blisterstreifentransportvorrichtung mit den Merkmalen des Patentanspruchs 1.

Bei der neuen Vorrichtung wird die im Stand der Technik bekannte ortsfeste Führung des Transportbands durch eine mit dem Transportband mitbewegte Führung ersetzt.

Wenn im Stand der Technik mit einer ortsfesten Führung hohe Anpresskräfte und/oder lange Transportwege realisiert werden sollen, muss ein hoher Unterdruck auf das Transportband aufgebracht werden. Durch diesen hohen Unterdruck entsteht eine entsprechend große Reibung zwischen der Unterseite des Transportbands und der ortsfesten Führung. Die erzeugte Druckdifferenz wirkt dabei über die gesamte Kontaktfläche des Transportbands zur Führung als zusätzliche Normalkraft. Durch diese Reibung entsteht Wärme und ein erhöhter Verschleiß. Weiterhin muss die Leistung des Antriebs des Transportbands deutlich erhöht werden. Es kommen auch andere unerwünschte Effekte der Reibung hinzu, wie z. B. der Haftgleiteffekt und ein seitliches Auswandern durch asymmetrische Reibkräfte in Förderrichtung.

Diese negativen Effekte der ortsfesten Führung des Transportbands werden nun durch das erfindungsgemäße umlaufend antreibbare Unterdruckkammerband beseitigt bzw. wesentlich reduziert. Das Unterdruckkammerband stellt die untere Begrenzung für die Unterdruckkammer so bereit, dass keine Reibung zwischen dem Transportband und dem Unterdruckkammerband entsteht. Dadurch können auch vergleichsweise breite und lange Transportbänder mit Unterdruck beaufschlagt werden, ohne dass durch die Reibung ein zu hoher Verschleiß entsteht oder die Antriebsleistung des Antriebs zu stark erhöht werden muss. Auch solche breiten und langen Transportbänder können also wirtschaftlich mit Unterdruck beaufschlagt werden.

Es versteht sich, dass unter dem umlaufend antreibbaren Transportband bzw. dem umlaufend antreibbaren Unterdruckkammerband in dieser Anmeldung nicht zwangsläufig ein Band zu verstehen ist, welches eine eigene Antriebeinheit im Sinne eines Motors bzw. einer Motor-/Getriebeeinheit aufweist. Der Antrieb kann auch in anderer Weise realisiert sein, beispielsweise dadurch, dass nur eines der Bänder eine eigene Antriebseinheit aufweist, sich die Bänder reibschlüssig kontaktieren und die Antriebsleistung des die eigene Antriebseinheit aufweisenden Bands hierdurch auf das andere Band übertragen wird.

Die Zuführung des Unterdrucks kann an unterschiedlichen Stellen an dem Unterdruckkammerband oder auch von der Seite - d. h. zwischen dem Transportband und dem Unterdruckkammerband - erfolgen. Bei dieser neuen Art der Unterdruckzuführung wirkt nur die begrenzte Fläche, die sich aus dem wirksamen Querschnitt der Unterdruckkanäle und der zugehörigen Abdichtungsflächen zusammensetzt. Diese Fläche ist wesentlich kleiner als die im Stand der Technik bekannte reibungsbehaftete Fläche.

Das Transportband und das Unterdruckkammerband können so antreibbar ausgebildet sein, dass sie in etwa derselben Richtung und mit etwa derselben Geschwindigkeit bewegt werden. Da der Kontakt zwischen der Oberseite des Unterdruckkammerbands und der Unterseite des Transportbands nur in einem Teilabschnitt des Transportbands besteht, gibt es also auch andere Abschnitte, in denen sich die Bewegungsrichtungen und Bewegungsgeschwindigkeiten der Bänder unterscheiden. Für die Erzielung der gewünschten niedrigen Reibung werden die Bänder aber in ihrem Kontaktbereich möglichst in derselben Richtung und mit derselben Geschwindigkeit bewegt. Es kann auch ein gewisser Schlupf zwischen den Bändern bestehen, so dass sich hierdurch die Geschwindigkeiten etwas unterscheiden. Die geringste Reibung entsteht aber dann, wenn die Geschwindigkeiten exakt übereinstimmen.

Das Transportband kann beim Beaufschlagen der Unterdruckkammer mit Unterdruck an dem Unterdruckkammerband anliegen. Genauer gesagt liegt die Oberseite des Unterdruckkammerbands dann wegen des Ansaugeffekts aufgrund des Unterdrucks dichtend an der Unterseite des Transportbands an. Bei übereinstimmenden Richtungen und Geschwindigkeiten der Bewegungen der Bänder entsteht somit keine Reibung zwischen den Bändern.

Die Unterdruckkammer kann durch Ausnehmungen und Vorsprünge an der Innenseite des Transportbands und/oder der Außenseite des Unterdruckkammerbands mitgebildet werden. Durch diese Ausnehmungen bzw. Vorsprünge wird im jeweiligen Bereich der benötigte Raum für die Unterdruckkammer geschaffen. In den anderen Bereichen liegt die Außenseite des Unterdruckkammerbands an der Innenseite des Transportbands an.

Das Transportband kann einen Zahnriemen aufweisen und die Unterdruckkammer durch zwei benachbarte Zähne des Zahnriemens und das auf den Zahnspitzen der Zähne aufliegende Unterdruckkammerband mitgebildet werden. Hierdurch lassen sich in vergleichsweise einfacher und kostengünstiger Weise die erforderlichen Unterdruckkammern bilden.

Die Unterdruckkammer ist durch eine Öffnung in dem Transportband mit der Atmosphäre verbunden. Mittels einer bekannten Unterdruckquelle wird durch diese Öffnung dann also der für die Ansaugung der zu transportierenden Blisterstreifen gewünschte Unterdruck in der Unterdruckkammer erzeugt.

Die Öffnung weist im Bereich der Oberseite des Transportbands eine so an die Geometrie der Blisterstreifen angepasste Form auf, dass die Blisterstreifen in der Öffnung angeordnet werden können, ohne die seitlichen Begrenzungen der Öffnung zu berühren. Hierdurch wird eine reibschlüssige definierte Anordnung der Blisterstreifen auf dem Transportband erreicht. Es erfolgt kein Formschluss, sondern die Öffnungen dienen nur zur Beaufschlagung der Blisterstreifen mit Unterdruck und zur teilweisen Absenkung der Blisterstreifen unterhalb der Oberfläche des Transportbands. Die Höfe der Blisterstreifen sind in den Hofaufnahmeöffnungen aufgenommen.

Die Vorrichtung weist weiterhin eine Unterdruckquelle, z. B. eine Vakuumpumpe, auf, die mit der Unterdruckkammer verbunden ist. Die Unterdruckquelle kann über eine Anschlussöffnung in dem Unterdruckkammerband mit der Unterdruckkammer verbunden sein. Es ist aber auch möglich, dass die Unterdruckquelle über eine zwischen dem Transportband und dem Unterdruckkammerband seitlich angeordnete Anschlussöffnung mit der Unterdruckkammer verbunden ist. Die Anordnung wird dabei jeweils so gewählt, dass die Reibkräfte möglichst gering sind.

Das Transportband kann einen Zahnriemen aufweisen und das Unterdruckkammerband als Flachriemen ausgebildet sein. In dieser Weise bilden die zwischen den Zähnen des Zahnriemens vorhandenen Ausnehmungen also einen Teil der Unterdruckkammern. Die Unterdruckkammern werden dann durch den Flachriemen nach unten hin abgeschlossen. Es ist aber ebenfalls möglich, genau die umgekehrte Anordnung zu wählen, d. h. das Transportband als Flachriemen und das Unterdruckkammerband als Zahnriemen auszubilden.

Der Zahnriemen ist vorzugsweise an seiner Oberseite mit einem Schaumrücken verbunden, in dem dann die Öffnungen für die Aufnahme der Gegenstände ausgebildet sind. Es kann sich dabei beispielsweise um einen Schaumrücken aus Polyurethanschaum oder einem vergleichbaren Material handeln.

An das Transportband kann sich ein Begrenzungselement anschließen, welches mittels einer Feder dichtend an das Transportband und das Unterdruckkammerband angepresst wird. In dieser Weise stellt die Feder also die erforderliche druckdichte Abdichtung der Unterdruckkammern relativ zur Atmosphäre bereit. Unebenheiten des Transportbands - und insbesondere seines Schaumrückens - werden dadurch ausgeglichen.

Das Transportband kann einen Antrieb aufweisen und das Unterdruckkammerband durch das Transportband angetrieben sein. Diese Anordnung bietet sich insbesondere für eine Nachrüstung bereits vorhandener Vorrichtungen an, da diese bereits über ein Transportband mit einem eigenen Antrieb verfügen. Das Unterdruckkammerband wird dann über den Reibkontakt zum Transportband durch dieses angetrieben.

Es ist aber auch möglich, dass das Transportband einen ersten Antrieb und das Unterdruckkammerband einen separaten zweiten Antrieb aufweist. Die Antriebe werden dann vorzugsweise so miteinander koordiniert geregelt, dass die Relativgeschwindigkeit zwischen dem Transportband und dem Unterdruckkammerband möglichst Null ist.

Bei den mittels der Vorrichtung zu transportierenden Gegenständen handelt es sich um in Blisterverpackungen verpackte pharmazeutische oder kosmetische Produkte. Diese sind als Blisterstreifen ausgebildet. Diese lassen sich dann mittels der neuen Vorrichtung sicher transportieren und können auf dieser exakt positioniert werden. Eine derartige Positionierung wird beispielsweise für eine durchzuführende Bedruckung der Verpackungen benötigt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Unterdruckkammer die Rede ist, ist dies so zu verstehen, dass genau eine Unterdruckkammer, zwei Unterdruckkammern oder mehr Unterdruckkammern vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Längsschnitt durch ein erstes Ausführungsbeispiel der neuen Blisterstreifentransportvorrichtung.
- **Fig. 2**: zeigt einen Ausschnitt aus einer Ansicht von oben auf die Vorrichtung gemäß Fig. 1.
- **Fig. 3**: zeigt ein Detail der Vorrichtung gemäß Fig. 1.
- **Fig. 4**: zeigt einen Querschnitt eines Details der Vorrichtung gemäß Fig. 1.
- **Fig. 5**: zeigt ein Detail der Vorrichtung gemäß Fig. 4.

### FIGURENBESCHREIBUNG

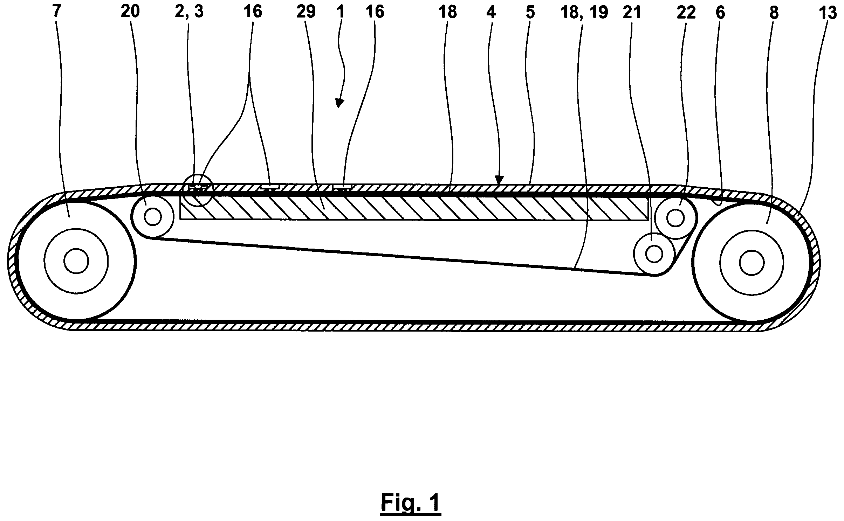

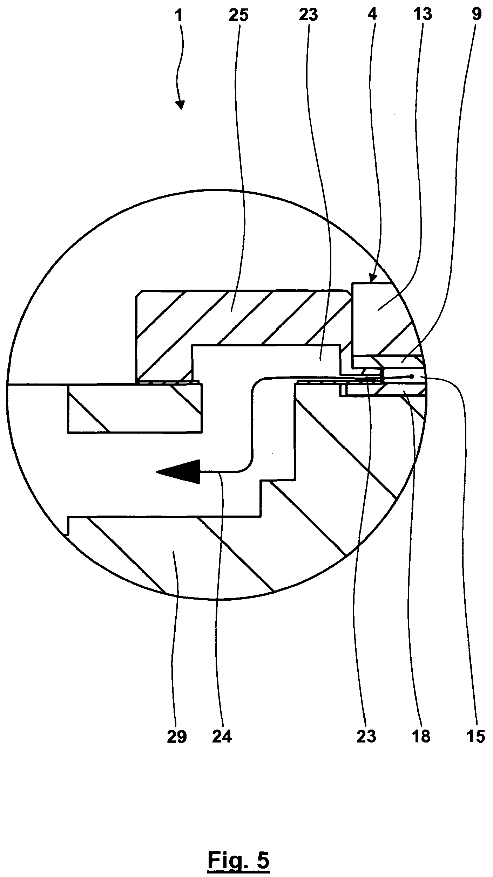

Die **Fig. 1-5** zeigen verschiedene Ansichten eines ersten Ausführungsbeispiels einer Blisterstreifentransportvorrichtung 1 zum Transportieren von Gegenständen 2. In den unterschiedlichen Darstellungen sind Teile der Vorrichtung 1 teilweise ausgeblendet, um die Übersichtlichkeit der Figuren zu verbessern. Bei den Gegenständen 2 handelt es sich um Blisterstreifen 3.

Die Vorrichtung 1 weist ein umlaufend antreibbares Transportband 4 mit einer Außenseite 5 und einer Innenseite 6 auf. Die Außenseite 5 dient dabei zur Aufnahme der Gegenstände 2. Das Transportband 4 wird um zwei drehbare Rollen 7, 8 umlaufend angetrieben, so dass es in für sich genommen bekannter Weise ein oberes Trum und ein unteres Trum bildet. Für die Erzielung der umlaufenden Bewegung des Transportbands 4 weist dieses einen (nicht dargestellten) Antrieb auf, über den eine der Rollen 7, 8 angetrieben wird. Andere Antriebsarten sind aber ebenfalls möglich.

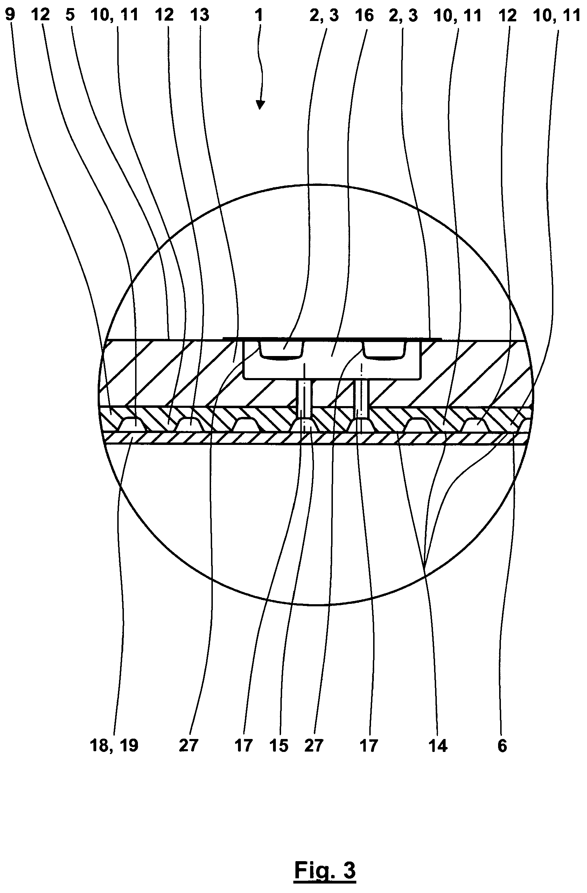

Wie insbesondere in Fig. 3 gut erkennbar ist, weist das Transportband 4 einen Zahnriemen 9 auf. Der Zahnriemen 9 weist Vorsprünge 10 bildende Zähne 11 und dazwischen angeordnete Ausnehmungen 12 auf. Das Transportband 4 weist weiterhin einen Schaumrücken 13 auf, der mit der von den Zahnspitzen 14 weg weisenden Oberfläche des Zahnriemens 9 verbunden ist.

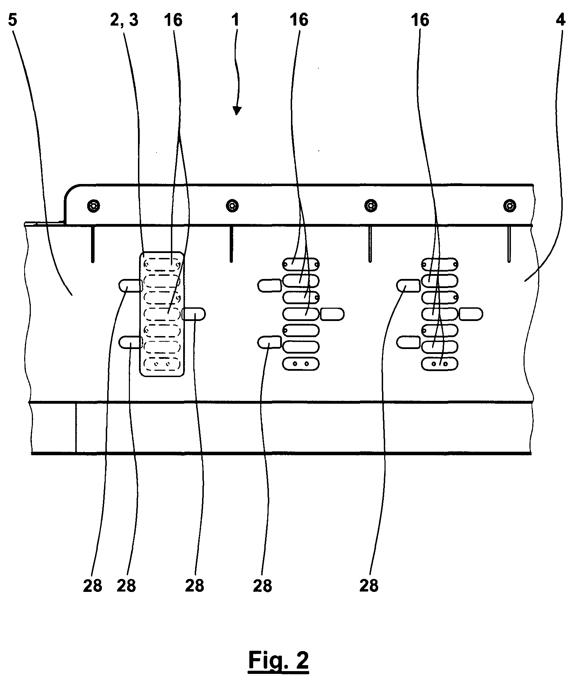

Die Vorrichtung 1 weist weiterhin eine Mehrzahl von Unterdruckkammern 15 auf. Die Unterdruckkammern 15 werden jeweils durch eine Öffnung 16 in dem Transportband 4 mitgebildet. Diese Öffnungen 16 sind mit der Atmosphäre verbunden. Wie insbesondere in den Fig. 2 und 3 erkennbar ist, dienen die Öffnungen 16 zur Aufnahme eines Teils der Gegenstände 2, wie dies unterhalb noch genauer beschrieben wird.

Über sich durch einen Teil des Schaumrückens 13 und des Zahnriemens 9 erstreckende Kanäle 17 sind die Öffnungen 16 mit jeweils einer der Ausnehmungen 12 verbunden. In dieser Weise bilden die Ausnehmungen 12, die Kanäle 17 und die Öffnungen 16 einen Teil der Unterdruckkammer 15.

Ein weiterer Teil der Unterdruckkammer 15 wird durch ein umlaufend antreibbares Unterdruckkammerband 18 gebildet. Das Unterdruckkammerband 18 ist hier als Flachriemen 19 ausgebildet. Andere Ausbildungen sind aber ebenfalls möglich. Das Unterdruckkammerband 18 wird über die Rollen 20, 21 und 22 geführt, so dass es sich in etwa derselben Richtung und mit etwa derselben Geschwindigkeit wie das Transportband 4 bewegt. Im vorliegenden Fall stellt das einen eigenen Antrieb aufweisende Transportband 4 den Antrieb für das Unterdruckkammerband 18 bereit. Das Unterdruckkammerband 18 könnte aber auch eine eigene Antriebseinheit aufweisen.

Wie in Fig. 3 gut erkennbar ist, bilden die Zahnspitzen 14 und die Ausnehmungen 12 die Innenseite 6 des Transportbands 4. Die Zahnspitzen 14 liegen auf dem Unterdruckkammerband 18 auf, so dass die Ausnehmungen 12 in dieser Richtung durch das Unterdruckkammerband 18 verschlossen werden. In dieser Weise wird also die Unterdruckkammer 15 durch das Unterdruckkammerband 18 mitgebildet.

Das Transportband 4 liegt an dem Unterdruckkammerband 18 an, wenn die Unterdruckkammer 15 mittels einer hier nicht dargestellten Unterdruckquelle mit Unterdruck im Vergleich zum Atmosphärendruck beaufschlagt wird. Für diese Beaufschlagung sind im vorliegenden Fall seitlich angeordnete Anschlussöffnungen 23 vorhanden, die mit den Unterdruckkammern 15 verbunden sind. Die Anschlussöffnungen 23 sind wiederum mit der (nicht dargestellten) Unterdruckquelle verbunden und entziehen den Unterdruckkammern 15 in der Strömungsrichtung 24 Luft.

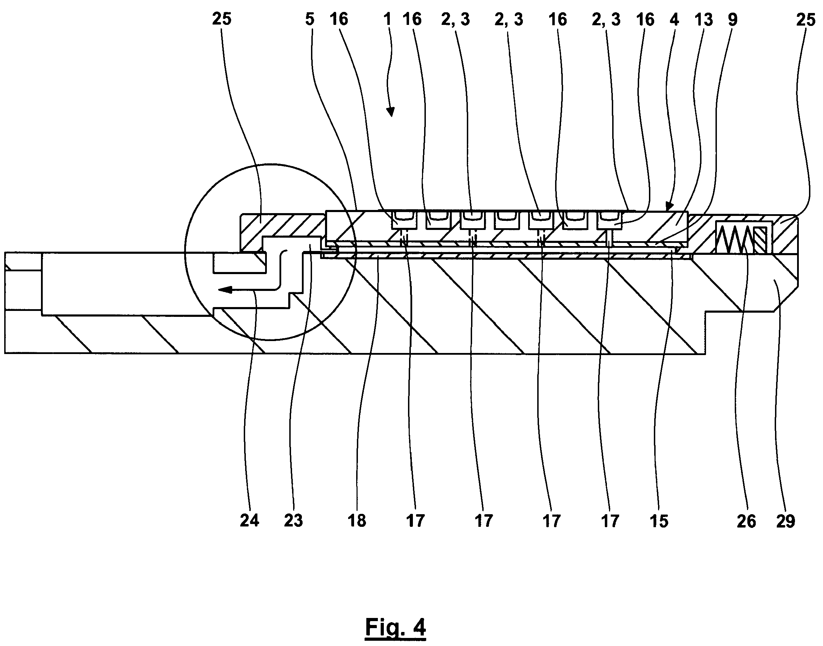

Die weitere Abdichtung ist zu beiden Seiten in Förderrichtung über Begrenzungselemente realisiert (siehe Fig. 4). Dabei weist hier das in Fig. 4 rechts dargestellte Begrenzungselement 25 eine Feder 26 auf, die das Begrenzungselement 25 dichtend an das Transportband 4 und das Unterdruckkammerband 18 anpresst. Hierfür ist das Begrenzungselement 25 begrenzt elastisch verformbar.

Wie in Fig. 2 erkennbar ist, werden die als Blisterstreifen 3 ausgebildeten Gegenstände 2 mit ihren Höfen 27 in den Öffnungen 16 positioniert. Hierdurch liegen dann also die Blisterstreifen 3 mit ihrer Produktentnahmeseite nach oben flach auf der Außenseite 5 des Transportbands 4. Die Hofaufnahmeöffnungen 16 sind dabei so groß dimensioniert, dass die Höfe 27 der Blisterstreifen 3 die seitlichen Begrenzungen der Öffnungen 16 nicht berühren. Es findet also keine Endpositionierung der Blisterstreifen 3 durch die Geometrie der Öffnungen 16 statt. Eine exakte Endpositionierung ist beispielsweise für die Bedruckung der Gegenstände 2 erforderlich. Diese Endpositionierung wird in anderer Weise realisiert. Hierzu dienen z. B. die Öffnungen 28, die nicht mittels Vakuum beaufschlagt werden. Die Blisterstreifen 3 werden dabei mittels zweier Finger (nicht dargestellt) geschwindigkeitssynchron auf das laufende Transportband 4 geschoben und dabei seitlich exakt geführt. Da die Finger funktionsbedingt in das Transportband 4 ragen, sind dort die entsprechenden Öffnungen 28 vorgesehen. Die mittige Öffnung 28 rechts der Blisteraufnahme ermöglicht das exakte Erkennen der Blistervorderkante zum Triggern des Druckvorganges mittels einer Lichtschranke.

Die Öffnungen 16 dienen also lediglich zur Aufbringung des Unterdrucks auf die Gegenstände 2 und zur Vorpositionierung, so dass diese flach auf dem Transportband 4 aufliegen und nach einer Endpositionierung auch in der eingenommenen Position verbleiben.

Die Vorrichtung 1 weist weiterhin einen Träger 29 auf, an dem die Begrenzungselemente 25 befestigt sind. Das Unterdruckkammerband 18 wird auch über den Träger 29 geführt. Da hier jedoch kein Vakuum bzw. kein Unterdruck herrscht, ist nur eine entsprechend geringe Reibung vorhanden.

### BEZUGSZEICHENLISTE

- 1: Vorrichtung
- 2: Gegenstand
- 3: Blisterstreifen
- 4: Transportband
- 5: Außenseite
- 6: Innenseite
- 7: Rolle
- 8: Rolle
- 9: Zahnriemen
- 10: Vorsprung
- 11: Zahn
- 12: Ausnehmung
- 13: Schaumrücken
- 14: Zahnspitze
- 15: Unterdruckkammer
- 16: Öffnung
- 17: Kanal
- 18: Unterdruckkammerband
- 19: Flachriemen
- 20: Rolle
- 21: Rolle
- 22: Rolle
- 23: Anschlussöffnung
- 24: Strömungsrichtung
- 25: Begrenzungselement
- 26: Feder
- 27: Hof
- 28: Öffnung
- 29: Träger

## Patentansprüche

1. Blisterstreifentransportvorrichtung (1), mit
einem umlaufend antreibbaren Transportband (4) mit einer Außenseite (5) und einer Innenseite (6), wobei die Außenseite (5) zur Aufnahme der Blisterstreifen (3) dient, und
einer Unterdruckkammer (15), die durch die Innenseite (6) des Transportbands (4) mitgebildet wird, **gekennzeichnet durch**
ein umlaufend antreibbares Unterdruckkammerband (18), das die Unterdruckkammer (15) mitbildet, und
eine Mehrzahl von Hofaufnahmeöffnungen (16) in dem Transportband (4), über die die Unterdruckkammer (15) mit der Atmosphäre verbunden ist, wobei die Hofaufnahmeöffnungen (16) im Bereich der Außenseite (5) des Transportbands (4) eine so an die Geometrie der Blisterstreifen (3) angepasste Form und Anordnung aufweisen, dass die Höfe (27) der Blisterstreifen (3) in den Hofaufnahmeöffnungen (16) angeordnet werden können, ohne die seitlichen Begrenzungen der Hofaufnahmeöffnungen (16) zu berühren und somit die Blisterstreifen (3) mit ihrer nach oben weisenden Produktentnahmeseite flach auf der Außenseite (5) des Transportbands (4) liegen.

2. Blisterstreifentransportvorrichtung (1) nach Anspruch 1, **dadurch gekennzeichnet, dass** das Transportband (4) und das Unterdruckkammerband (18) so antreibbar ausgebildet sind, dass sie in etwa derselben Richtung und mit etwa der selben Geschwindigkeit bewegt werden.

3. Blisterstreifentransportvorrichtung (1) nach Anspruch 1 oder 2, **dadurch gekennzeichnet, dass** das Transportband (4) beim Beaufschlagen der Unterdruckkammer (15) mit Unterdruck an dem Unterdruckkammerband (18) anliegt.

4. Blisterstreifentransportvorrichtung (1) nach mindestens einem der vorhergehenden Ansprüche, **dadurch gekennzeichnet, dass** die Unterdruckkammer (15) durch Ausnehmungen (12) und Vorsprünge (10) an der Innenseite (6) des Transportbands (4) und/oder der Außenseite (5) des Unterdruckkammerbands (18) mitgebildet wird.

5. Blisterstreifentransportvorrichtung (1) nach mindestens einem der vorhergehenden Ansprüche, **dadurch gekennzeichnet, dass** das Transportband (4) einen Zahnriemen (9) aufweist und die Unterdruckkammer (15) durch zwei benachbarte Zähne (11) des Zahnriemens (9) und das auf den Zahnspitzen (14) der Zähne (11) aufliegende Unterdruckkammerband (18) mitgebildet wird.

6. Blisterstreifentransportvorrichtung (1) nach mindestens einem der vorhergehenden Ansprüche, weiterhin **gekennzeichnet durch** eine mit der Unterdruckkammer (15) verbundene Unterdruckquelle.

7. Blisterstreifentransportvorrichtung (1) nach Anspruch 6, **dadurch gekennzeichnet, dass** die Unterdruckquelle über eine Anschlussöffnung in dem Unterdruckkammerband (18) mit der Unterdruckkammer (15) verbunden ist.

8. Blisterstreifentransportvorrichtung (1) nach Anspruch 6, **dadurch gekennzeichnet, dass** die Unterdruckquelle über eine zwischen dem Transportband (4) und dem Unterdruckkammerband (18) seitlich angeordnete Anschlussöffnung (23) mit der Unterdruckkammer (15) verbunden ist.

9. Blisterstreifentransportvorrichtung (1) nach mindestens einem der vorhergehenden Ansprüche, **dadurch gekennzeichnet, dass** das Transportband (4) einen Zahnriemen (9) aufweist und das Unterdruckkammerband (18) als Flachriemen (19) ausgebildet ist.

10. Blisterstreifentransportvorrichtung (1) nach mindestens einem der vorhergehenden Ansprüche, **dadurch gekennzeichnet, dass** sich an das Transportband (4) ein Begrenzungselement (25) anschließt, welches mittels einer Feder (26) dichtend an das Transportband (4) und das Unterdruckkammerband (18) angepresst wird.

11. Blisterstreifentransportvorrichtung (1) nach mindestens einem der vorhergehenden Ansprüche, **dadurch gekennzeichnet, dass** das Transportband (4) einen Antrieb aufweist und das Unterdruckkammerband (18) durch das Transportband (4) angetrieben wird.

12. Blisterstreifentransportvorrichtung (1) nach mindestens einem der vorhergehenden Ansprüche, **dadurch gekennzeichnet, dass** das Transportband (4) einen ersten Antrieb und das Unterdruckkammerband (18) einen separaten zweiten Antrieb aufweist.

13. Blisterstreifentransportvorrichtung (1) nach mindestens einem der vorhergehenden Ansprüche, **dadurch gekennzeichnet, dass** Öffnungen (28) in dem Transportband (4) vorgesehen sind, die nicht mittels Vakuum beaufschlagt werden und zur Endpositionierung der Blisterstreifen (3) auf dem Transportband (4) dienen.

## Claims

1. A blister pack transport apparatus (1), comprising:
a revolvingly drivable conveyor belt (4) including an outer side (5) and an inner side (6), the outer side (5) serving to accept the blister packs (3), and
a negative pressure chamber (15) being partly formed by the inner side (6) of the conveyor belt (4), **characterised by**
a revolvingly drivable negative pressure chamber belt (18) partly forming the negative pressure chamber (15), and
a plurality of pocket receiving openings (16) in the conveyor belt (4) via which the negative pressure chamber (15) is connected to the atmosphere, the pocket receiving openings (16) in the region of the outer side (5) of the conveyor belt (4) having a shape and arrangement being adapted to the geometry of the blister packs (3) such that the pockets (27) of the blister packs (3) can be arranged in the pocket receiving openings (16) without contacting the lateral limits of the pocket receiving openings (16) such that the blister packs (3) with their product removal side facing upwardly are located flat on the outer side (5) of the conveyor belt (4).

2. The blister pack transport apparatus (1) of claim 1, **characterised in that** the conveyor belt (4) and the negative pressure chamber belt (18) are designed to be drivable such that they are moved approximately in the same direction and approximately at the same velocity.

3. The blister pack transport apparatus (1) of claim 1 or 2, **characterised in that** the conveyor belt (4) contacts the negative pressure chamber belt (18) when the negative pressure chamber (15) is subjected to negative pressure.

4. The blister pack transport apparatus (1) of at least one of the preceding claims, **characterised in that** the negative pressure chamber (15) is partly formed by recesses (12) and protrusions (10) at the inner side (6) of the conveyor belt (4) and/or the outer side (5) of the negative pressure chamber belt (18).

5. The blister pack transport apparatus (1) of at least one of the preceding claims, **characterised in that** the conveyor belt (4) includes a toothed belt (9), and the negative pressure chamber (15) is partly formed by two adjacent teeth (11) of the toothed belt (9) and by the negative pressure chamber belt (18) being supported on the tooth tips (14) of the teeth (11).

6. The blister pack transport apparatus (1) of at least one of the preceding claims, further **characterised by** a source of negative pressure being connected to the negative pressure chamber (15).

7. The blister pack transport apparatus (1) of claim 6, **characterised in that** the source of negative pressure is connected to the negative pressure chamber (15) by a connection opening in the negative pressure chamber belt (18).

8. The blister pack transport apparatus (1) of claim 6, **characterised in that** source of negative pressure is connected to the negative pressure chamber (15) by a connection opening (23) being laterally arranged between the conveyor belt (4) and the negative pressure chamber belt (18).

9. The blister pack transport apparatus (1) of at least one of the preceding claims, **characterised in that** the conveyor belt (4) includes a toothed belt (9) and the negative pressure chamber belt (18) is designed as a flat belt (19).

10. The blister pack transport apparatus (1) of at least one of the preceding claims, **characterised in that** a limiting element (25) is located next to the conveyor belt (4), the limiting element (25) being sealingly pressed against the conveyor belt (4) and the negative pressure chamber belt (18) by a spring (26).

11. The blister pack transport apparatus (1) of at least one of the preceding claims, **characterised in that** the conveyor belt (4) includes a drive, and the negative pressure chamber belt (18) is driven by the conveyor belt (4).

12. The blister pack transport apparatus (1) of at least one of the preceding claims, **characterised in that** the conveyor belt (4) includes a first drive, and the negative pressure chamber belt (18) includes a separate second drive.

13. The blister pack transport apparatus (1) of at least one of the preceding claims, **characterised in that** openings (28) are provided in the conveyor belt (4), the openings (28) not being subjected to vacuum and serving for final positioning of the blister packs (3) on the conveyor belt (4).

## Revendications

1. Dispositif de transport de bandes de blisters (1), avec
une bande de transport (4) pouvant être entraînée en rotation, avec un côté externe (5) et un côté interne (6), le côté externe (5) servant à loger les bandes de blisters (3), et
une chambre à dépression (15) qui est formée conjointement par le côté interne (6) de la bande de transport (4), **caractérisé par**
une bande de chambre à dépression (18) pouvant être entraînée en rotation, qui forme conjointement la chambre à dépression (15), et
une pluralité d'ouvertures de logement de bouches (16) dans la bande de transport (4), par l'intermédiaire desquelles la chambre à dépression (15) est reliée à l'atmosphère, les ouvertures de logement de bouche (16) comprenant, au niveau du côté externe (5) de la bande de transport (4), une forme et un dispositif adapté à la géométrie des bandes de blisters (3) de façon à ce que les bouches (27) des bandes de blisters (3) puissent être disposées dans les ouvertures de logement de bouches (16) sans entrer en contact avec les limitations latérales des ouvertures de logement de bouches (16) et donc les bandes de blisters (3) sont couchées, avec leur côté de prélèvement de produit orienté vers le haut, à plat sur le côté externe (5) de la bande de transport (4).

2. Dispositif de transport de bande de blisters (1) selon la revendication 1, **caractérisé en ce que** la bande de transport (4) et la bande de chambre à dépression (18) soient conçues de façon à pouvoir être entraînées, de façon à ce qu'elles soient déplacées dans environ la même direction et avec environ la même vitesse.

3. Dispositif de transport de bande de blisters (1) selon la revendication 1 ou 2, **caractérisé en ce que** la bande de transport (4) s'appuie, lors de l'alimentation de la chambre à dépression (15) avec une dépression, contre la bande de chambre à dépression (18).

4. Dispositif de transport de bande de blisters (1) selon au moins une des revendications précédentes, **caractérisé en ce que** la chambre à dépression (15) est constituée conjointement d'évidements (12) et de saillies (10) sur le côté interne (6) de la bande de transport (4) et/ou sur le côté externe (5) de la bande de chambre à dépression (18).

5. Dispositif de transport de bande de blisters (1) selon au moins une des revendications précédentes, **caractérisé en ce que** la bande de transport (4) comprend une courroie dentée (9) et la chambre à dépression (15) est constituée conjointement de deux dents adjacentes (11) de la courroie dentée (9) et de la bande de chambre de dépression (18) reposant sur les pointes (14) des dents (11).

6. Dispositif de transport de bande de blisters (1) selon au moins l'une des revendications précédentes, **caractérisé en outre par** une source de dépression reliée à la chambre à dépression (15).

7. Dispositif de transport de bande de blisters (1) selon la revendication 6, **caractérisé en ce que** la source de dépression est reliée avec la chambre de dépression (15) par l'intermédiaire d'une ouverture de raccordement dans la bande de chambre à dépression (18).

8. Dispositif de transport de bande de blisters (1) selon la revendication 6, **caractérisé en ce que** la source de dépression est reliée avec la chambre à dépression (15) par l'intermédiaire d'une ouverture de raccordement (23) disposée latéralement entre la bande de transport (4) et la bande de chambre à dépression (18).

9. Dispositif de transport de bande de blisters (1) selon au moins l'une des revendications précédentes, **caractérisé en ce que** la bande de transport (4) comprend une courroie dentée (9) et la bande de chambre à dépression (18) est constituée comme une courroie plate (19).

10. Dispositif de transport de bande de blisters (1) selon au moins l'une des revendications précédentes, **caractérisé en ce que** la bande de transport (4) est prolongée par un élément de limitation (25), qui est comprimé à l'aide d'un ressort (26) de manière étanche contre la bande de transport (4) et la bande de chambre à dépression (18).

11. Dispositif de transport de bande de blisters (1) selon au moins l'une des revendications précédentes, **caractérisé en ce que** la bande de transport (4) comprend un dispositif d'entraînement et la bande de chambre à dépression (18) est entraînée par la bande de transport (4).

12. Dispositif de transport de bande de blisters (1) selon au moins l'une des revendications précédentes, **caractérisé en ce que** la bande de transport (4) comprend un premier dispositif d'entraînement et la bande de chambre à dépression (18) comprend un deuxième dispositif d'entraînement séparé.

13. Dispositif de transport de bande de blisters (1) selon au moins l'une des revendications précédentes, **caractérisé en ce que** des ouvertures (28) sont prévues dans la bande de transport (4), qui ne sont pas alimentées en vide et qui permettent le positionnement final des bandes de blisters (3) sur la bande de transport (4).
